Europäisches Patentamt

European Patent Office

Office européen des brevets

(11) Veröffentlichungsnummer: **0 156 137**
**B1**

# EUROPÄISCHE PATENTSCHRIFT

(45) Veröffentlichungstag der Patentschrift:
**07.01.88**

(51) Int. Cl.⁴: **A 47 J 43/046,** A 47 J 43/08

(21) Anmeldenummer: **85101417.5**

(22) Anmeldetag: **11.02.85**

(54) Elektrisch betriebenes Gerät für die Bearbeitung und Zubereitung von Nahrungsmitteln aller Art.

(30) Priorität: **09.03.84 DE 3408691**

(43) Veröffentlichungstag der Anmeldung:
**02.10.85 Patentblatt 85/40**

(45) Bekanntmachung des Hinweises auf die Patenterteilung:
**07.01.88 Patentblatt 88/1**

(84) Benannte Vertragsstaaten:
**DE FR GB IT NL**

(56) Entgegenhaltungen:
**DE - C - 970 577**
**DE - C - 1 183 645**
**US - A - 2 284 155**

(73) Patentinhaber: **ROBERT KRUPS STIFTUNG & CO. KG.,**
**Heresbachstrasse 29, D-5650 Solingen 19 (DE)**

(72) Erfinder: **Maass, Rufold, Sperlingsweg 45,**
**D-5650 Solingen 19 (DE)**

(74) Vertreter: **Buse, Karl Georg, Dipl.-Phys. et al,**
**Patentanwälte Dipl.-Phys. Buse Dipl.-Phys. Mentzel**
**Dipl.-Ing. Ludewig Unterdörnen 114 Postfach 20 02 10,**
**D-5600 Wuppertal 2 (DE)**

**Beschreibung**

Die Erfindung bezieht sich auf ein elektrisch betriebenes Gerät für die Bearbeitung und Zubereitung von Nahrungsmitteln aller Art, mit einem Gehäuse zur Unterbringung des Elektromotors und von zugehörigen Schalt- und Steuereinrichtungen, mit einem neben dem Gehäuse angeordneten, auf einen Gehäusefuss aufsetzbaren Aufnahmebehälter, mit einer Arbeitswelle, deren in den Gehäusefuss rangendes freies Ende ein zugleich Kühlluft erzeugendes Rad aufnimmt, das seinerseits auf seiner Umfangsfläche einen Riemen, vorzugsweise einen Zahnriemen, aufnimmt, der über ein zweites Rad geführt ist, welches auf der Motorwelle des Elektromotors fest angebracht ist, wobei zur Führung von Kühlluft und zur Verminderung der Geräusche der Elektromotor von einer Motorabdeckung umgeben ist, die als beidseitig offener Hohlkörper ausgebildet ist und über lösbare Verbindungsmittel, wie Rast-, Steck- oder Klemmmittel, mit einer Trägerplatte verbunden ist.

Bei bekannten — offenkundig vorbenutzten — Ausführungsformen von derartigen elektrisch betriebenen Geräten für die Bearbeitung und Zubereitung von Nahrungsmitteln ist der Motor in der Regel in dem Gehäuse untergebracht. Dies ist sowohl im Bezug auf die entstehenden Geräusche beim Betrieb des Elektromotors als auch im Hinblick auf die Wirksamkeit der Kühlung für den Elektromotor nachteilig. Denn die in der Regel dünnen Wandungen des Gehäuses sind kaum geeignet, die entstehenden Geräusche einzudämmen und der Abstand des Elektromotors zu dem Aussengehäuse ist vielfach so gross, dass die Kühlluft keinen guten Kontakt mit den Aussenflächen des Elektromotors erhält.

Bei einer anderen bekannten — ebenfalls offenkundig vorbenutzten — Ausführungsform eines derartigen elektrisch betriebenen Gerätes für die Zubereitung und Bearbeitung von Nahrungsmitteln ist auf der Motorwelle ein Lüfterrad mit radialen Flügeln angeordnet, durch welches Luft von einer mit Gitterstäben versehenen Eintrittsöffnung im oberen Teil des Gehäuses eingesaugt, über den Elektromotor geführt und an einem mit Gitterstäben versehenen Auslass unterhalb des Elektromotors abgeführt wird. Bei dieser bekannten Ausführungsform wird der Elektromotor von einem Rahmen getragen, der innerhalb des Gehäuses derart befestigt ist, dass die Motorwelle senkrecht verläuft. Der Rahmen hat einen zylindrischen Mittelteil, der den Elektromotor umgibt und diesen in einem kegelstumpfförmigen Teil des Gehäuses festhält. Der Rahmen hat ferner einstückig mit ihm eine Verlängerung, die in den Fuss des Gehäuses weitergeführt ist und dort eine Lagerhülse für die Welle mit Kupplung für ein Rührgerät trägt.

Der zylindrische Teil des Rahmens hat eine besondere Abdeckung, wobei zwischen den beiden Teilen eine Schraubverbindung vorhanden ist. Dabei ist das Bürstenpaar an der Abdeckung angebracht, derart, dass es mit dem Kommutator zusammenarbeiten kann. Die Welle des Motors it an ihrem oberen Bereich mittels eines balligen Lagers an der Abdeckung gelagert. Im unteren Bereich ist die Motorwelle dagegen mittels eines Kugellagers in einem Boden oder Querstück des zylinderförmigen Mittelteiles des Rahmens gelagert.

Diese Ausführungsform hat vor allem den Nachteil, dass der Elektromotor in einem sperrigen und dazu noch mehrteiligen Rahmen angeordnet ist. Dieser Rahmen ist darüber hinaus einstückig mit Verlängerungen gehalten, die in ihrem Endbereich eine Lagerstelle für die Welle mit zugeordneter Kupplung bilden.

Durch die DE-A-970 577 ist eine Trag- und Antriebsvorrichtung für wahlweise aufsetzbare oder anschliessbare Küchengeräte mit einem den senkrecht stehenden Antriebsmotor tragenden und das Untersetzungsgetriebe umschliessenden Bodenteil und einem damit verbindbaren Deckelteil bekannt geworden. Eine Motorumkleidung weist schlitzförmige Öffnungen für den Ein- und Austritt der Motorkühlluft auf. Diese wird durch einen am oberen Ende der Motorumkleidung vorgesehenen Ringkanal angesaugt, der wenigstens eine aus Schallschluckstoff, wie Gummi, bestehende Kanalwand aufweist. Zum Austritt der Motorkühlluft dienen Auslassschlitze, die durch verteilt zwischen Deckelteil und Bodenteil angeordnete Zwischenlagen gebildet sind. Die rohrförmige Motorumkleidung ist im Bodenteil befestigt und am gegenüberliegenden anderen Ende mittels einer Buchse an einem Gehäusedeckel abgestützt. Ein die Kühlluft ansaugendes Gebläserad ist unmittelbar auf der Motorwelle befestigt. Zwar wird durch diese Gestaltung einer Antriebsvorrichtung eine Geräuschminderung erreicht, jedoch ist dazu ein beachtlicher Aufwand erforderlich. Denn neben der eigentlichen rohrförmigen Motorumkleidung sind zusätzliche, aus einem schallschluckenden Werkstoff bestehende Teile, wie eine Buchse oder eine Kappe erforderlich. Vor allem ist durch die direkte Anbringung des Gebläserades auf der Motorwelle eine wesentliche Geräuschquelle nicht beseitigt, vor allem, wenn es sich um hochtourig umlaufende Motorwellen handelt.

Der Erfindung liegt die Aufgabe zugrunde, elektrisch betriebene Geräte zum Zubereiten und Bearbeiten von Nahrungsmitteln der eingangs näher gekennzeichneten Art derart weiter zu verbessern, dass entstehende Geräusche weniger für den Gerätebenutzer hörbar sind und dass die Kühlwirkung für den Elektromotor im Vergleich zu dem Bekannten wesentlich verbessert wird. Ausserdem sollen die Einrichtungen zur Geräuschverminderung bzw. zur Kühlluftführung leicht herstellbar und einfach montierbar sein.

Dieses Ziel ist erfindungsgemäss dadurch erreicht, dass dem als Lüfterrad ausgebildeten, auf der Arbeitswelle angeordneten Rad Kühlluftführungen zugeordnet sind, die unterhalb der Motorabdeckung enden und denen ein im wesentlichen ringförmiger Spalt zwischen der Aussenfläche des Elektromotors und den Innenwandungen der Motorabdeckung nachgeschaltet ist, der in einen Durchbruch einmündet, durch welchen die Kühlluft über Öffnungen in einer Zwischenwand des Gehäuses und durch einen Spalt des Gehäuses ins Freie lenkbar ist.

Durch die erfindungsgemässe Ausbildung des elektrisch betriebenen Gerätes zur Bearbeitung und Zubereitung von Nahrungsmitteln wird durch die Anwendung der Motorabdeckung gewissermassen — wie an sich bekannt — eine doppelwandige Umhüllung geschaffen. Dadurch werden mehrere Luftkammern gebildet, die zwischen der Gehäusewand des Gehäuses und dem Elektromotor liegen und die durch die Wandungen der Motorabdeckung voneinander getrennt sind. Diese Anordnung gewährleistet eine gute Geräuschdämmung. Zum anderen wird die innere dieser Kammern zugleich zur Führung der Kühlluft benutzt. Dabei kann man den Abstand der Motorabdeckung von der Aussenfläche so gering wählen, dass nur ein schmaler ringförmiger Spalt verbleibt. Die durch diesen Ringspalt geführte Kühlluft kommt in einen innigen Kontakt mit der Aussenfläche des Elektromotors, so dass sich ein guter Wärmeaustausch ergibt. Die auf diese Weise aufgeheizte Kühlluft wird auf kurzem Weg in die freie Atmosphäre überführt. Die Ausbildung des auf der Arbeitswelle angeordneten Rades des Riementriebes als Lüfterrad bringt eine weitere Geräuschverminderung, weil das die Kühlluft erzeugende Rad nicht mehr auf der hochtourig umlaufenden Motorwelle direkt angeordnet ist. Das Lüfterrad auf der Arbeitswelle hat dabei einen Durchmesser, der um ein Vielfaches grösser ist als derjenige des Rades des Riementriebes, das auf der Motorwelle sitzt.

Bei einer ersten Ausführungsform der Erfindung hat die Motorabdeckung lediglich zwei Funktionen, nämlich zur Verminderung der Geräusche des Elektromotors beizutragen und zum anderen den Elektromotor beim Betrieb zu kühlen. Bei dieser Ausführungsform wird der Motor mit der Trägerplatte in irgendeiner bekannten Weise verbunden. Bei diesem Ausführungsbeispiel hat die Motorabdeckung somit im Bezug auf den Elektromotor keine tragende Funktion.

In Abwandlung dieser Ausführungsform kann nach einem weiteren Vorschlag der Erfindung die Motorabdeckung auch als Träger für den Elektromotor benutzt werden und zusammen mit diesem mit der Trägerplatte verbunden werden.

Es empfiehlt sich, den oberen Durchbruch der Motorabdeckung von einem hochgezogenen umlaufenden Rand zu umgeben, der vorzugsweise durch Aufstecken eine Dichtung aufnimmt, die sich bereichsweise an benachbarte Flächen der Zwischenwand des Gehäuses anlegt.

Ferner ist es zweckmässig, die Motorabdeckung in ihrem dem Durchbruch benachbarten Bereich eine kammerartige Aufnahme zur Unterbringung jeweils eines Pufferstückes zur Halterung des Motors aufweisen zu lassen.

Es empfiehlt sich, die Motorabdeckung als einstückigen Hohlkörper mit Versteifungsrippen und angeformten Verbindungsmitteln auszubilden. Eine solche Motorabdeckung lässt sich wohlfeil herstellen, erleichtert die Aufnahme des Elektromotors und lässt sich darüber hinaus leicht mit der Trägerplatte lösbar verbinden, die im Gehäusefuss des Gerätes vorgesehen ist.

In der Zeichnung ist die Erfindung in mehreren Ausführungsbeispielen dargestellt und zwar zeigen:

Fig. 1 ein erfindungsgemäss ausgebildetes, elektrisch betriebenes Gerät für die Bearbeitung und Zubereitung von Nahrungsmitteln in Vorderansicht, teilweise geschnitten,

Fig. 2 das elektrisch betriebene Gerät für die Bearbeitung und Zubereitung von Nahrungsmitteln gemäss Fig. 1 in Draufsicht, teilweise weggebrochen,

Fig. 3 eine erste Ausführungsform eines Lüfterrades für das elektrisch betriebene Gerät nach der Fig. 1 in Draufsicht,

Fig. 4 im vergrösserten Massstab einen Teilschnitt durch das elektrisch betriebene Gerät für die Bearbeitung und Zubereitung von Nahrungsmitteln nach Fig. 1, teilweise weggebrochen,

Fig. 5 ein Knetwerkzeug für das elektrisch betriebene Gerät für die Bearbeitung und Zubereitung von Nahrungsmitteln nach Fig. 1 in Draufsicht und im verkleinerten Massstab,

Fig. 6 das Knetwerkzeug gemäss der Fig. 5 im Schnitt,

Fig. 7 einen für das elektrisch betriebene Gerät nach Fig. 1 bestimmten Adapter mit einem daran lösbar angeordneten Messer, teilweise in Seitenansicht, teilweise im Schnitt,

Fig. 8 eine Draufsicht auf das Messer gemäss der Fig. 7, jedoch im verkleinerten Massstab,

Fig. 9 einen für das elektrisch betriebene Gerät gemäss Fig. 1 bestimmten Adapter mit einer lösbar damit verbundenen Sahnescheibe, teilweise in Seitenansicht, teilweise im Schnitt,

Fig. 10 eine Draufsicht auf die Sahnescheibe gemäss Fig. 9, jedoch im verkleinerten Massstab,

Fig. 11 einen für das elektrisch betriebene Gerät für die Bearbeitung und Zubereitung von Nahrungsmitteln gemäss Fig. 1 bestimmten Adapter mit einem lösbar daran befestigten Werkzeugträger, teilweise in Seitenansicht, teilweise geschnitten,

Fig. 12 einen Schnitt durch den Adapter mit Werkzeugträger gemäss der Fig. 11 entlang der Linie XII-XII;

Fig. 13 eine Draufsicht auf den Werkzeugträger gemäss der Fig. 11, jedoch im verkleinerten Massstab,

Fig. 14 einen Längsschnitt durch den Werkzeugträger gemäss der Fig. 13,

Fig. 15 in Draufsicht eine Raspelscheibe, die dem Werkzeugträger gemäss der Fig. 13 und 14 zugeordnet ist,

Fig. 16 die Raspelscheibe gemäss der Fig. 15 im Schnitt,

Fig. 17 einen Schnitt durch das Gehäuse des elektrisch betriebenen Gerätes für die Bearbeitung und Zubereitung von Nahrungsmitteln gemäss Fig. 2, entlang der Linie XVII-XVII der Fig. 1, teilweise weggebrochen,

Fig. 18 eine Draufsicht auf das Gehäuse gemäss Fig. 17, teilweise weggebrochen und teilweise geschnitten, dargestellt in der Schaltbereitschaftslage des Schalters,

Fig. 19 eine Motorabdeckung für den Elektromotor des elektrisch betriebenen Gerätes für die Bearbeitung und Zubereitung von Nahrungsmitteln gemäss der Fig. 1 und

Fig. 20 eine Draufsicht auf die Motorabdeckung gemäss der Fig. 19.

Es sei zunächst vorausgeschickt, dass in den Figuren der Zeichnungen nur diejenigen Teile eines elektrisch betriebenen Gerätes für die Bearbeitung und Zubereitung von Nahrungsmitteln dargestellt sind, die für das Verständnis der Erfindung von Bedeutung sind. Es fehlen insbesondere die elektrischen Zuleitungen und die Verdrahtungen sowie die mit ihnen zusammenwirkenden Schalt- und Steuereinrichtungen. Alle fehlenden Teile können einen an sich bekannten Aufbau haben.

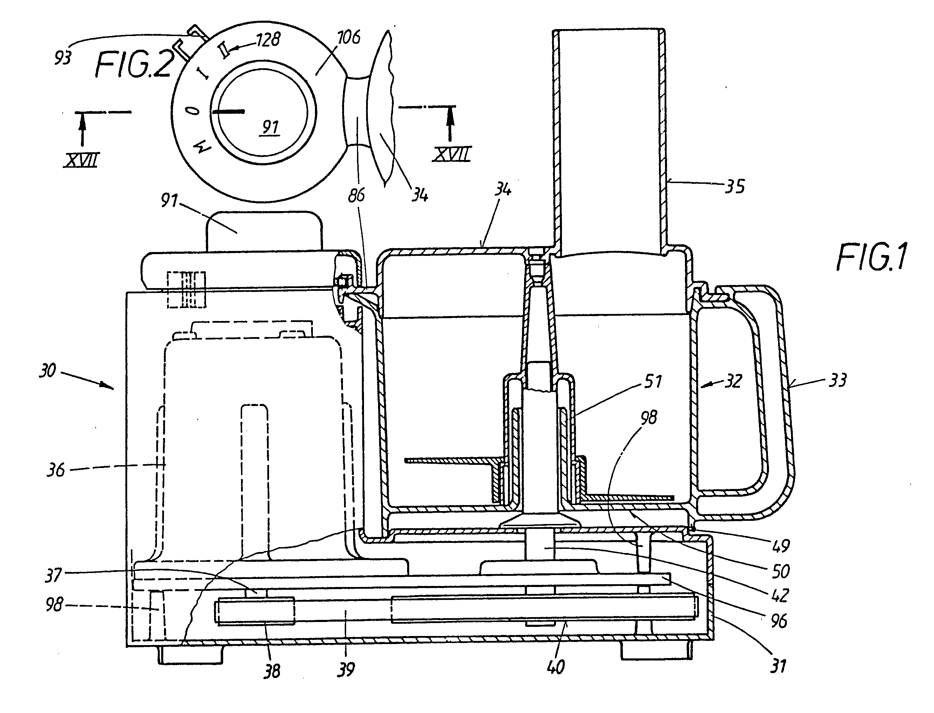

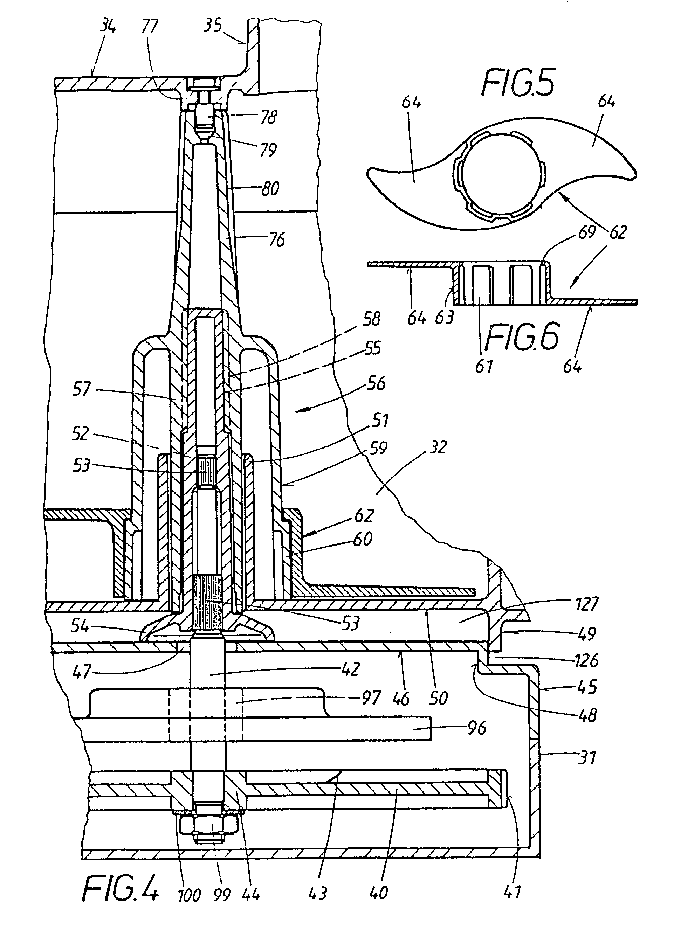

Das dem Ausführungsbeispiel zugrundegelegte elektrisch betriebene Gerät für die Bearbeitung und Zubereitung von Nahrungsmitteln hat — wie aus der Fig. 1 der Zeichnung ersichtlich — ein Gehäuse 30, in welchem der Elektromotor und Steuerungs- und Schaltungseinrichtungen des Gerätes untergebracht sind. Das Gehäuse 30 hat einen Gehäusefuss 31, wobei Gehäuse 30 und Gehäusefuss 31 — wie die Fig. 1 erkennen lässt — im wesentlichen L-förmig gestaltet sind. Auf der neben dem Gehäuse 30 liegenden Oberfläche des Gehäusefusses 31 ist ein generell mit 32 bezeichneter Aufnahmebehälter (Topf) aufgestellt. Der Aufnahmebehälter 32 ist am Gerätefuss 31 in bekannter Weise gegen Abheben zu sichern, wie z.B. durch bajonettverschlussartige Halter. Der Aufnahmebehälter 32 hat einen angeformten Handgriff 33 und einen abnehmbaren Deckel 34, der seinerseits mit einem Einfüllstutzen 35 ausgestattet ist, durch den in bekannter Weise das Zuführen von zu zerkleinernden Nahrungsmitteln erfolgt. Auch der Deckel 34 ist am Aufnahmebehälter 32 durch beispielsweise Unterfassen von Vorsprüngen gesichert.

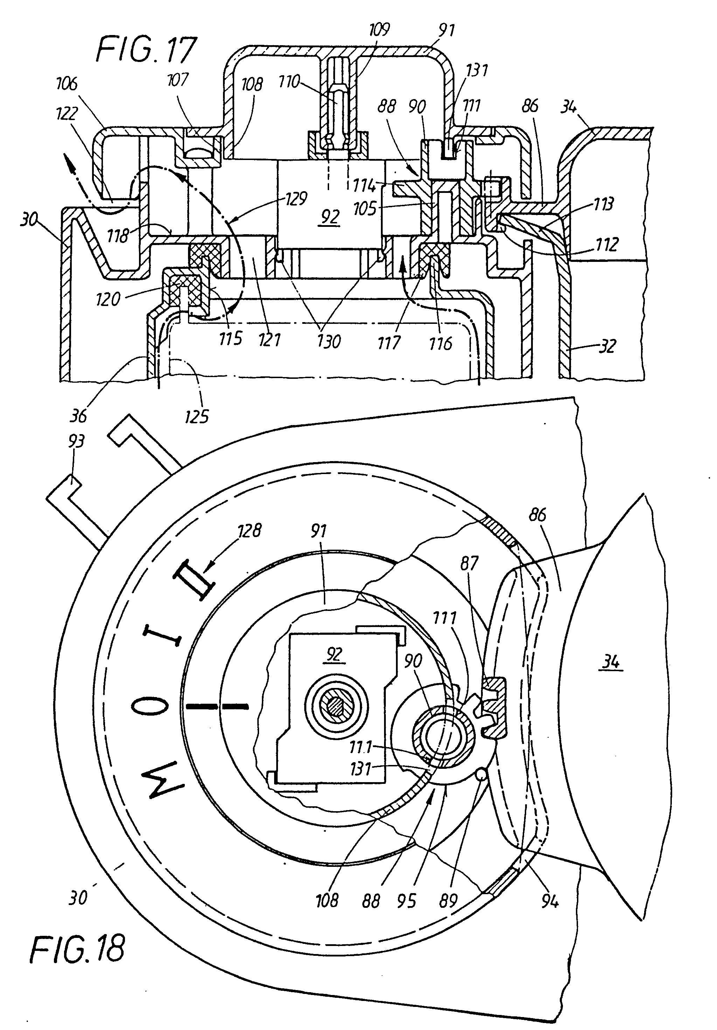

In dem Gehäuse ist ein an sich bekannter Elektromotor 125 untergebracht, der in der Fig. 1 der Zeichnung nicht sichtbar, jedoch in der Fig. 17 strichpunktiert dargestellt ist. Der Elektromotor 125 sowie eine Motorabdeckung 36 werden von einer Trägerplatte 96 aufgenommen, die sich im wesentlichen über die gesamte Länge des Gehäusefusses 31 erstreckt. Die Trägerplatte 96 wirkt mit Abstützungen 98 zusammen, die den Wandungen des Gehäusefusses 31 innenliegend angeformt sind und für eine Lagesicherung der Trägerplatte 96 sorgen. Dabei wirken die Abstützungen 98 von unterschiedlichen Seiten her auf die Trägerplatte 96 ein.

Der Elektromotor 125 hat eine Motorwelle 37, deren freies Ende in den Hohlraum des Gehäusefusses 31 hineinragt und dort ein Rad 38 trägt, welches mit einem Riemen, vorzugsweise mit einem Zahnriemen 39, zusammenwirkt. Dieser Zahnriemen 39 wird — wie die Fig. 1 erkennen lässt — über ein im Durchmesser wesentlich grösseres Antriebsrad 40 herumgeführt. Dieses Antriebsrad 40 ist erfindungsgemäss als Lüfterrad ausgebildet und hat an seiner Umfangsfläche liegend eine Vielzahl von Zähnen 41, die mit den nicht näher bezeichneten Gegenzähnen des Zahnriemens 39 in an sich bekannter Weise zusammenwirken.

Das als Lüfterrad ausgebildete Antriebsrad 40 ist auf dem in den Hohlraum des Gehäusefusses 31 hineinragenden Ende einer Arbeits- bzw. Werkzeugwelle 42 angeordnet. Gemäss dem Ausführungsbeispiel nach der Fig. 4 ist das Lüfterrad 40 auf dem Ende der Antriebswelle 42 mittels einer Mutter 99 unter Zwischenschaltung einer Scheibe 100 gehalten. Daneben können aber auch andere bekannte Befestigungsarten zum Halten des Lüfterrades 40 auf der Werkzeug- oder Antriebswelle 42 benutzt werden. Insbesondere können im Bereich der Nabe 44 des Lüfterrades 40 Befestigungsmöglichkeiten für das freie Ende der Werkzeug- oder Antriebswelle 42 vorgesehen sein. Beispielsweise ist die formschlüssige Anordnung einer unrunden Mutter in der Nabe 44 des Lüfterrades 40 möglich.

Dem Lüfterrad 43 ist eine Vielzahl von Schaufeln 43 zugeordnet. Hinsichtlich der Ausbildung und der Gestaltung dieser Schaufeln 43 gibt es zahlreiche Möglichkeiten. Zwei dieser möglichen Ausführungsformen sind in den Fig. 3 und 4 der Zeichnung dargestellt. Die Schaufeln 43 können im übrigen nicht nur eine an sich bekannte Ausbildung sondern auch in ebenfalls an sich bekannter Weise mit der Nabe 44 verbunden sein. Auch ist eine einstückige Ausführung denkbar. Soweit es die Platzverhältnisse im Hohlraum des Gehäusefusses zulassen und soweit es keine zu grosse Geräuscherhöhung beim Betrieb gibt, ist es auch möglich, die Schaufeln über den Rand des Lüfterrades 40 hinausragen zu lassen.

Wie die Fig. 1 und 4 der Zeichnungen erkennen lassen, ist der Gehäusefuss 31 zweiteilig ausgestaltet, wobei die beiden Teile mit bekannten — und daher fortgelassenen — Mitteln zusammengehalten werden können. Der untere, nicht näher bezeichnete Teil des Gehäusefusses 31 ruht auf einer Fläche, beispielsweise auf einer Tischplatte. Der Oberteil 45 hat einen glatten Durchbruch 47 zum Durchgriff der Arbeits- bzw. Werkzeugwelle 42. Dieser Durchbruch liegt im Bereich der Decke 46 des Oberteiles 45, wobei die Decke 46 über einen Absatz 48 in die Mantelfläche übergeht. Der Aufnahmebehälter 32 (Topf) hat an seiner Unterseite Vorsprünge 49, die dem Boden 50 des Aufnahmebehälters 32 unmittelbar angeformt sind. Die Vorsprünge 49 — die im Abstand voneinander liegen — wirken mit der Aussenfläche des Absatzes 48 zusammen, so dass eine Querverschiebung des Aufnahmebehälters 32 auf dem Gehäusefuss 31 nicht möglich ist. Durch die Anordnung von mehreren Vorsprüngen 49 und durch die Bildung eines Spaltes 126 zur benachbarten Fläche des Oberteiles 45 des Gehäusefusses 31 sind Öffnungen gebildet, durch die eine gegebenenfalls in den Zwischenraum 127 zwischen Decke 46 und Boden 50 gelangte Flüssigkeit in noch zu schildernder Weise nach aussen befördert werden kann.

Dem Boden 50 des Aufnahmebehälters 32 ist ein hülsenartiger Vorsprung 51 angeformt. Dieser ragt — wie die Fig. 1 und 4 der Zeichnung erkennen lassen — verhältnismässig weit in das Innere des Aufnahmebehälters 32 hinein. In den hülsenartigen Vorsprung 51 ragt das obere Ende der Arbeits- bzw. Werkzeugwelle 42. Die Arbeits- bzw. Werkzeugwelle 42 ist durchmessermässig mehrfach abgesetzt und hat etwa im Bereich des hülsenartigen Vorsprunges 51 liegend zwei im Abstand voneinander angeordnete Befestigungsbereiche 53, die als Rändelungen an ihrer Aussenfläche ausgebildet sind. Diese Befestigungsbereiche 53 dienen zur festen Verbindung mit einer generell mit 52 bezeichneten Isolierhülse, die einstückig aus einem Kunststoff hergestellt und nach oben hin verschlossen ist. Das gegenüberliegende andere Ende der Isolierhülse 52 ist als scheibenartiger Fuss 54 ausgebildet, der — wie die Fig. 4 am besten erkennen lässt — in den Zwischenraum 127 zwischen dem Deckel 46 und dem Boden 50 des Aufnahmebehälters 32 angeordnet ist. Dieser scheibenartige Fuss 54 sorgt dafür, dass Flüssigkeiten, die beim Gebrauch des elektrisch betriebenen Gerätes durch den hülsenartigen Vorsprung 51 hindurch aus dem Aufnahmebehälter 32 kommend in den Zwischenraum 127 gelangt sein sollten, aus diesem wieder hinausgeschleudert werden und dabei durch den erwähnten Spalt 126 bzw. durch die Freiräume zwischen den Vorsprüngen 49 ins Freie gelangen können.

An der Aussenseite der Isolierhülse 52 sind Kupplungsvorsprünge 55 vorgesehen, die mit Gegenkupplungen 58 eines generell mit 56 bezeichneten Adapters zusammenwirken. In Draufsicht gesehen bilden die Kupplungsvorsprünge 55 der Isolierhülse 52 eine etwa wellenförmige oder auch zahnradförmig verlaufende Fläche, die sich zu einem Kreis schliesst. In die Wellentäler bzw. die Zahnlücken greifen zwischen den Kupplungsvorsprüngen 55 die Gegenkupplungen 58 des Adapters 56 ein, wobei die Kraftangriffsflächen im wesentlichen senkrecht aufeinanderstehen. Auf diese Weise ist der Adapter 56 auf Mitnahme gekuppelt. Dabei sind die Gegenkupplungen 58 so gestaltet, dass ein passgerechtes formschlüssiges Zusammenwirken mit den Kupplungen 55 erfolgt.

Wie aus der Fig. 4 der Zeichnung am besten erkennbar ist, hat der Adapter ein inneres Teilstück 57, das nach unten hin offen ist. Der untere Bereich des inneren Teilstückes 57 greift in den Zwischenraum zwischen der Innenwand des hülsenartigen Vorsprunges 51 und der Aussenwand der Isolierhülse 52, wobei in der in Fig. 4 gezeigten Lage der Kupplungsvorsprünge 55 der Isolierhülse 52 mit den Gegenkupplungen 58 an der Innenwand des inneren Teilstückes 57 miteinander in Eingriff stehen. Dies bedeutet, dass der Adapter 57 mit der Isolierhülse 52 auf Mitnahme gekuppelt ist.

Unter Bildung eines Zwischenraumes hat der Adapter 56 auch ein äusseres Teilstück 59, welches nach oben hin geschlossen, nach unten hin jedoch offen ist. Im Bereich der unteren Aussenfläche des äusseren Teilstückes 59 hat der Adapter 56 Gegenkupplungen 60, die mit Kupplungen 61 eines Werkzeuges zusammenwirken. Die Gegenkupplungen 60 sind im gewählten Ausführungsbeispiel untereinander gleichgestaltet und gleichmässig verteilt über den unteren Bereich der Umfangsfläche des äusseren Teilstückes 59 angeordnet. Auch hier gilt, dass in Draufsicht gesehen der untere Bereich des äusseren Teilstückes 59 wellenförmige oder zahnradförmige Flächen aufweist, die sich zu einem Kreis schliessen. In die Wellentäler bzw. Zahnlücken zwischen den Gegenkupplungen 60 greifen die Kupplungen 61 passend ein.

Zu den Kupplungen und Gegenkupplungen sowohl von Adapter 56 als auch von der Isolierhülse 52 gilt, dass in den dargestellten Ausführungsformen diese in Richtung der Längsachse des Adapters 56 bzw. der Isolierhülse 52 verlaufen. In Abwandlung dieser dargestellten Ausführungsbeispiele können die Kupplungen und Gegenkupplungen auch mit dieser Längsachse jeweils einen Winkel einschliessen. Entsprechendes gilt auch für die mit dem Adapter 56 zusammenwirkenden Kupplungen der Werkzeuge, die eine angepasste Schrägstellung bei dieser Variante haben müssen.

Die Gegenkupplungen 60 des äusseren Teilstückes 59 des Adapters 56 arbeiten mit Kupplungen 61 von Werkzeugen (Arbeitswerkzeugen) zusammen. Erfindungsgemäss werden ein und demselben Adapter 56 mehrere unterschiedlich gestaltete Werkzeuge zugeordnet, die in Abhängigkeit von den durchzuführenden Arbeiten von dem Benutzer wahlweise herangezogen werden und jeweils in einfacher Weise lösbar mit dem Adapter 56 verbunden werden.

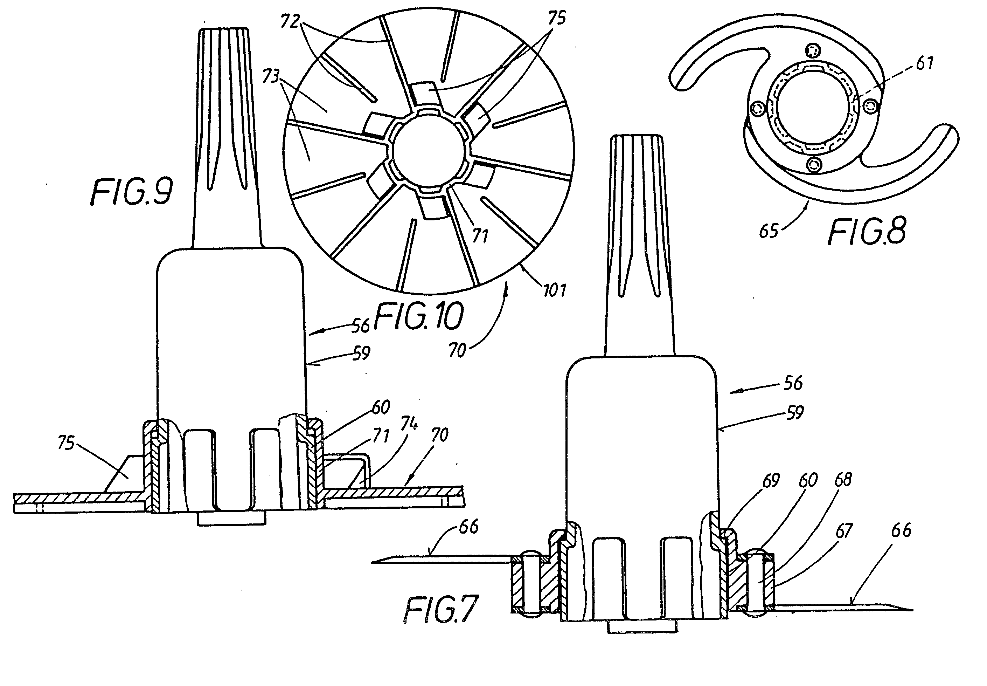

In den Figuren der Zeichnungen sind insgesamt drei unterschiedlich gestaltete Werkzeuge dargestellt. Die Fig. 7 und 8 zeigen ein generell mit 65 bezeichnetes Messer. Dieses besitzt zwei sichelförmig gestaltete Messerflügel 66 die in bekannter Weise angeschärft sind und die — vergl. dazu die Fig. 7 der Zeichnung — in unterschiedlichen Ebenen angeordnet sind. Dabei ist der eine Messerflügel 66 dem Boden 50 des Aufnahmebehälters 32 zugekehrt, während der diametral gegenüberliegende andere Messerflügel 66 in einem grösseren Abstand von diesem Boden 50 liegt. Die beiden Messerflügel 66 sind dabei durch Niete 68 mit der Nabe 67 des Messers 65 fest verbunden. Die Nabe 67 hat dabei auch die schon erwähnten Kupplungen 61, die mit den Gegenkupplungen 60 des äusseren Teilstückes 59 des Adapters 56 zusammenwirken. Am Messer 65 ist ein Auflagerand 69 vorgesehen, der mit einem nicht näher bezeichneten Vorsprung des Adapters 56 zusammenwirkt. Aus der in Fig. 7 dargestellten Lage — der Arbeitslage — ergibt sich, dass das Abstützen des Auflagerandes 69 des Messers 65 in einer solchen Höhe am Adapter 56 erfolgt, dass der untere der beiden Messerflügel 66 in einem geringen Abstand vom Boden 50 des Aufnahmebehälters 32 angeordnet ist.

In den Fig. 5 und 6 der Zeichnung ist ein weiteres, wahlweise mit dem Adapter 56 zu kuppelndes Werkzeug dargestellt. Es handelt sich dabei um ein generell mit 62 bezeichnetes Knetwerkzeug. Dieses Knetwerkzeug 62 ist einstückig aus einem Werkstoff, beispielsweise aus einem Kunststoff, hergestellt und hat zwei untereinander gleichgestaltete Flügel 64, die jeweils gekrümmte Begrenzungsflächen aufweisen, die in eine Spitze auslaufen. Die Flügel 64 sind untereinander gleichgestaltet, jedoch in unterschiedlicher Höhe der Nabe 63 des Knetwerkzeuges 62 angeformt. Die Nabe 63 hat wiederum Kupplungen 61, die mit den Gegenkupplungen 60 des Adapters 56 zusammenwirken. Die Kupplungen 61 des Knetwerkzeuges 62 können gleichgestaltet sein wie die des Messers 65. Auch hat das Knetwerkzeug 62 wiederum einen Auflagerand 69, der in der schon geschilderten Weise mit einer nicht näher bezeichneten, an der Aussenfläche des Adapters 56 liegenden Schulter zusammenwirkt.

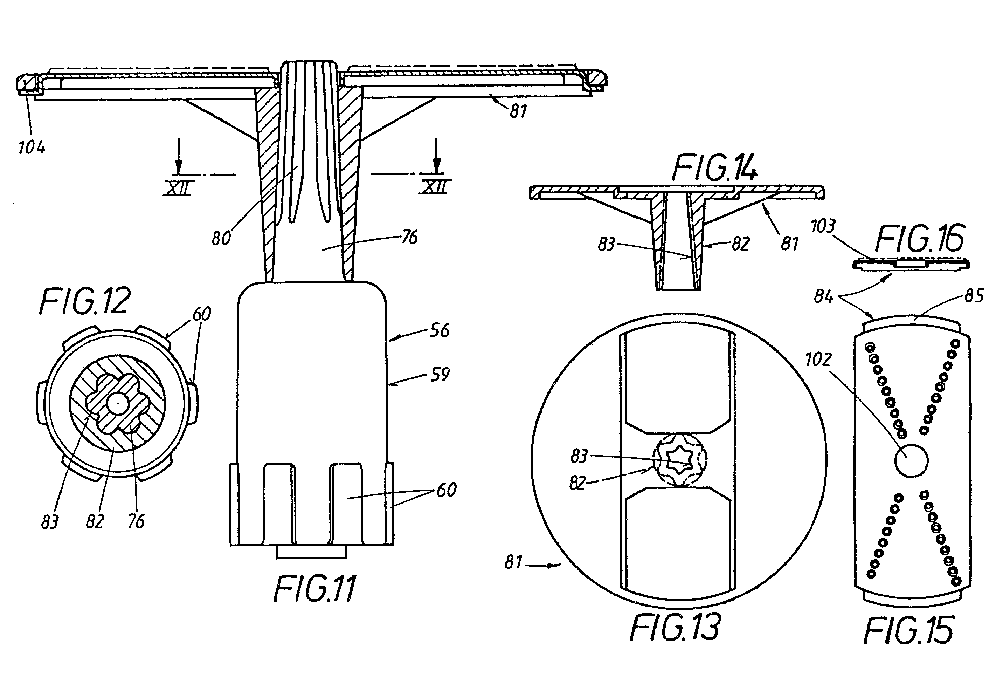

Als drittes, wahlweise mit dem Adapter 56 zu kuppelndes Werkzeug ist die in den Fig. 9 und 10 dargestellte Sahnescheibe 70 vorhanden. Die Sahnescheibe 70 hat auf ihrem dem Boden des Aufnahmebehälters 32 zugekehrten Seite eine Vielzahl von sternförmig angeordneten Rippen 72, die jedoch unterschiedlich lang bemessen sind, und zwar wechselt jeweils eine kurze mit einer langen Rippe 72 ab, wobei die längere Rippe 72 jeweils in die als Mitnehmernabe 71 ausgebildete Nabe der Sahnescheibe 70 einmündet. Die längeren Rippen 72 schliessen Luftleitkanäle 73 ein, deren untere Wand beim bestimmungsgemässen Gebrauch von der Innenfläche des Bodens 46 des Aufnahmebehälters 32 gebildet wird. Die Rippen 72 liegen mit ihren äusseren Flächen auf dem Boden 50 des Aufnahmebehälters 32 auf. Den Luftleitkanälen 73 sind im Bereich der Mitnehmernabe 71 Lufteinlassöffnungen 74 zugeordnet, während Luftauslassöffnungen 101 durch den am Umfangsbereich der Sahnescheibe 70 zwischen benachbarten Rippen 72 vorhandenen Freiraum gebildet werden. Die Lufteinlassöffnungen 74 sind durch taschenartig nach oben aufgewölbte Wandteile 75 gebildet, wobei jeweils zwei längere benachbarte Rippen 72 ein eine Lufteinlassöffnung 74 bildender Wandteil 75 zugeordnet ist.

Im übrigen hat die Mitnehmernabe 71 wiederum Kupplungen 61, die denjenigen des Messers 65 bzw. des Knetwerkzeuges 62 entsprechen. Diese Kupplungen 61 wirken wiederum mit den Gegenkupplungen 60 des Adapters 56 zusammen, nur mit dem Unterschied, dass der Auflagerand 69 in der Arbeitslage gemäss Fig. 9 nunmehr entfernt von der nicht näher bezeichneten Schulter im Bereich der Gegenkupplungen 60 des Adapters 56 angeordnet ist. Dies geschieht, um zu gewährleisten, dass die Aussenflächen der Rippen 72 — wie gewollt — auf dem Boden 50 des Aufnahmebehälters 32 aufliegen. Auf der anderen Seite ist der Auflagerand 69 als Mitnehmer benutzbar, nämlich dann, wenn der Adapter 56 zusammen mit der Sahnescheibe 70 von der Isolierhülse 52 aus dem Aufnahmebehälter 32 herausgezogen werden soll.

Die Sahnescheibe 70 dient nicht nur zum Bereiten von Schlagsahne sondern auch zum Zubereiten von Eischnee, Mayonnaise und dergleichen. Bei Benutzung einer solchen Sahnescheibe 70 wird nicht nur ein Rühreffekt erzielt sondern es gelingt, mit ihr die sahnige Konsistenz des Rührgutes durch Verteilung feinster Luftbläschen im Rührgut zu erzielen. Dabei wird durch die Drehung der Sahnescheibe 70 das Rührgut infolge der Fliehkraft im Eck-Ringbereich des Bodens 50 des Aufnahmebehälters 32 wulstartig angeordnet und mit feinsten Luftbläschen durchsetzt. Durch diese intensive Arbeitsweise der Sahnescheibe 70 ist die benötigte Zeit, selbst zur Herstellung grösserer Mengen von Schlagsahne, Eischnee, Mayonnaise oder dgl. gering.

Wie die Fig. 1 und 11 der Zeichnung erkennen lassen, ist bei der dargestellten Ausführungsform des Adapters 56 nicht nur vorgesehen, diesen in seinem unteren, also dem Boden 50 des Aufnahmebehälters 32 zugekehrten Bereich wahlweise eines der unterschiedlich gestalteten Werkzeuge zuzuordnen sondern es wird auch die Möglichkeit gegeben, im oberen, also dem Deckel 34 zugekehrten Bereich entweder direkt mit dem Adapter 56 Arbeitswerkzeuge zu kuppeln oder dort einen Werkzeugträger 81 lösbar zu befestigen, der seinerseits Arbeitswerkzeuge, wie Raffelscheibe, Pommes-Frites-Scheibe, Reibscheibe, Parmesanscheibe oder dgl. trägt.

Um dies zu ermöglichen, hat der Adapter 56 eine Verlängerung 76, die durchmessermässig gegenüber dem unteren Bereich des Adapters 56 verkleinert ist. Im gewählten Ausführungsbeispiel erstreckt sich die Verlängerung 76 bis etwa zum Deckel 34. Dort ist ein Lager 77 in einer Verdickung des Deckels 34 vorgesehen, welches zur Unterbringung eines Lagerstiftes 78 dient, dessen aus dem Lager 77 herausragendes Ende in eine Bohrung 79 des vorderen freien Endes der Verlängerung 76 des Adapters 56 eingreift. Eine derartige Lagerstelle lässt es zu, dass der Deckel 34 ohne weiteres vom Aufnahmebehälter 32 entfernt werden kann. Dies deshalb, weil der Lagerstift 58 leicht aus der Bohrung 79 der Verlängerung 76 des Adapters 56 herausgezogen werden kann. Umgekehrt greift beim Aufsetzen des Deckels 34 dessen Lagerstift wieder in diese Bohrung 79 ein.

An der Aussenfläche der Verlängerung 76 des Adapters 65 sind — und zwar im oberen, dem Deckel 34 zugekehrten Bereich liegend — Gegenkupplungen 80 vorgesehen, die in ihrem Aufbau und auch in ihrer Wirkungsweise denjenigen Gegenkupplungen 60 entsprechen, die im unteren Bereich des Adapters 56 vorhanden sind. Es ist lediglich zu vermerken, dass insoweit Unterschiede bestehen, als sich die Längen der Gegenkupplungen 60 und 80 voneinander unterscheiden können. Diese Gegenkupplungen 80 können — was in den Zeichnungen nicht dargestellt ist — unmittelbar mit einem an sich bekannten Arbeitswerkzeug zusammenwirken, welches das durch den Einfüllstutzen 35 des Deckels 34 zugeführte Gut zerkleinert.

Gemäss den Fig. 11 bis 16 der Zeichnungen ist jedoch eine andere Ausführungsform gewählt, nämlich die, dass der Verlängerung 76 ein generell mit 81 bezeichneter Werkzeugträger zugeordnet ist, der die Gestalt einer Trägerscheibe aufweist. Der Werkzeugträger 81 hat eine Nabe 82, die von einer Bohrung durchsetzt wird, an deren Innenwandungen Kupplungen 83 angeordnet sind, die mit den Gegenkupplungen 80 der Verlängerung 76 des Adapters 56 in der schon geschilderten Weise zusammenwirken. Das Querschnittsbild gemäss der Fig. 12 zeigt, dass auch in diesem Falle die Kupplungen 83 und Gegenkupplungen 80 wellenförmige, sich zu einem Kreis ergänzende Gestalt aufweisen.

Bei dem Ausführungsbeispiel nach der Fig. 11 der Zeichnung ist die Verlängerung 56 bis zum freien Ende hin mit Gegenkupplungen 80 versehen. In Abwandlung dieser Ausführungsform kann man die Gegenkupplungen 80 auch vorher enden lassen und das vordere freie Ende der Verlängerung 76 zylinderförmig gestalten. Somit läuft in diesem Falle das freie Ende der Verlängerung 76 in einen aussen glattwandigen Zylinder mit konstantem Durchmesser aus, der kleiner ist als der Aussendurchmesser der Verlängerung 76 und etwa den Kerndurchmesser des die Kupplungsrippen 80 aufweisenden Schaftes der Verlängerung 76 entspricht. Die wirksame Stützhöhe dieses Absatzes kann man der Höhe der Nabe des aufzunehmenden Werkzeuges anpassen, um bei unterschiedlich hohen Werkzeugen immer den gleichen Abstand zur Unterkante des Einfüllschachtes zu gewährleisten.

Ferner ist bei der Ausführungsform nach der Fig. 11 vorgesehen, dass das freie Ende der Nabe 82 des Werkzeugsträgers 81 sich auf dem nicht näher bezeichneten, durch unterschiedliche Durchmesser gebildeten Absatz des Adapters 56 abstützt. Auch hier kann man eine Abänderung vornehmen, indem man die Nabe 82 kürzer bemisst, so dass sie nicht mit dem erwähnten Absatz des Adapters 56 in Wirkverbindung tritt. Man kann in diesem Falle durch Absatzbildung zwischen Kupplungen und Gegenkupplungen für eine Lagefixierung des Werkzeuges auf der Verlängerung 76 des Adapters 56 sorgen.

Ein Werkzeug, welches lösbar mit dem Werkzeugträger 81 verbunden werden kann, ist in den Fig. 15 und 16 der Zeichnung dargestellt, und zwar handelt es sich bei diesem Werkzeug um eine Raspelscheibe 84. Die Raspelscheibe 84 ist ein in Draufsicht gesehen etwa rechteckig gestalteter Körper, der an seinen beiden Schmalseiten je eine Verlängerung 85 aufweist, die aus der Grundebene der Raspelscheibe 84 herausgebogen ist, um den Rand 104 des Werkzeugträgers 81 zu untergreifen, wie dies in der Fig. 11 ersichtlich ist. Die Raspelscheibe 84 hat ferner einen mittig angeordneten Durchbruch 102, der von einem nach unten, also in Richtung auf den Adapter 56 ragenden, umlaufenden Kragen 103 umgeben ist. Durch den Durchbruch 102 der Raspelscheibe 84 greift das vordere Ende der Verlängerung 76. Dabei hat man es in der Hand, den mit der Verlängerung 76 zu kuppelnden Werkzeugen unterschiedlich lang bemessene Kragen 103 zuzuordnen. Die Raspelscheibe 84 oder ein anderes — grundsätzlich bekanntes — Werkzeug kann in bekannter Weise auf das Nahrungsmittel einwirken, welches durch den Einfüllstutzen 35 des Deckels 34 zugeführt werden kann. In Abhängigkeit von den durchzuführenden Arbeiten kann man dann dem Werkzeugträger 81 ein anderes Werkzeug als die dargestellte Raspelscheibe 84 zuordnen.

Zu dem erfindungsgemäss ausgebildeten Gerät zum Bearbeiten und Zubereiten von Nahrungsmitteln gehört auch eine Sicherheitseinrichtung, deren Ausbildung und Gestalt aus den Fig. 17 und 18 der Zeichnung ersichtlich ist. Durch eine solche Sicherheitseinrichtung soll ein Inbetriebsetzen des Gerätes bei abgenommenem Deckel 34 verhindert werden, was zu Verletzungen des Benutzers führen könnte, weil die umlaufenden Arbeitswerkzeuge frei zugänglich wären.

Im gewählten Ausführungsbeispiel ist der Deckel 34 des Aufnahmebehälters 32 mit einer Verlängerung 86 versehen, deren vorderer freier Bereich als Verzahnung 87 ausgebildet ist. Diese Verzahnung 87 wirkt mit einem Schaltrad bzw. Ritzel 88 zusammen, welches auf dem Gehäuse 30 drehbar gelagert ist. Dem Schaltrad bzw. Ritzel ist auch ein Anschlag 89 zugeordnet, der in der Stellung des Schaltrades 88 gemäss Fig. 18 an dem einen Ende einer Ausnehmung 95 anliegt. Bestandteil des Schaltrades bzw. Ritzels 88 ist auch ein rohrförmiger Ansatz 90, der in bezug auf eine mittlere scheibenförmige Nabe 114 des Schaltrades 88 nach den beiden Seiten hin vorsteht. In die untere Bohrung des hülsenförmigen Ansatzes 90 greift ein Vorsprung 105 des Gehäuses 30. Auf diesem Vorsprung 105 ist das Schaltrad 88 drehbar gelagert.

Zu dem Gehäuse 30 gehört auch eine Abdeckung 106, die den oberen Abschluss des Gehäuses 30 bildet und in ihrer Mitte liegend einen Durchbruch 107 aufweist, in den vorstehende Randbereiche 108 eines Drehknopfes 91 eingreifen. An der Innenwand seiner Decke liegend hat der Drehknopf 91 einen Hohlzapfen 109, der zur Unterbringung eines Lager- bzw. Betätigungsstiftes 110 dient, der seinerseits einem Schalter 92 zugeordnet ist. Dieser Schalter 92 kann einen an sich bekannten Aufbau haben, so dass in den Fig. 17 und 18 der Zeichnung nur das Gehäuse des Schalters 92 veranschaulicht ist. Der Schalter 92 kann im übrigen über Rastverbindungen 130 mit Teilen des Gehäuses 30 lösbar verbunden werden.

Der obere Teil des rohrförmigen Ansatzes 90 des Schaltrades 88 hat zwei Schlitze 111, die so angeordnet sind, dass der Randbereich 108 beim Betätigen des Drehknopfes 91 in sie eintreten und damit eine Drehung des Schaltrades 88 verhindern kann. Die Begrenzungswandungen der Schlitze 111 sind gekrümmt, wobei der Krümmungsmittelpunkt mit dem Mittelpunkt des Drehknopfes 91 zusammenfällt. Nachzutragen bleibt noch, dass die Verlängerung 86 des Deckels 34 durch einen Aufnahmeschlitz 94 des Gehäuses hindurchgreift, derart, dass die Verzahnung 87 innerhalb des Gehäuses 30 zu liegen kommt.

Die Wirkungsweise der als Sicherheitsschalter ausgebildeten Schalteinrichtung des elektrisch betriebenen Gerätes zum Zubereiten bzw. zum Behandeln von Nahrungsmitteln ist die folgende:

Zur Inbetriebnahme des elektrischen Gerätes wird dessen Aufnahmebehälter 32 auf den Gehäusefuss 31 in der aus der Fig. 1 ersichtlichen Weise aufgestellt. Der Deckel 34 des Aufnahmebehälters 32 wird dann derart verdreht, dass seine Verlängerung 86 in den Aufnahmeschlitz 94 des Gerätes 30 eintaucht. Bei dieser Bewegung untergreift ein im Querschnitt L-förmiger Bereich 112 die Schnaupe 113 des Aufnahmebehälters 32, wie dies die Fig. 17 der Zeichnung erkennen lässt.

Beim Verdrehen der Verlängerung 86 des Deckels 34 kommt dessen Verzahnung 87 in Wirkverbindung mit den Zähnen des Schaltrades bzw. Ritzels 88, das auf dem hohlen Vorsprung 105 des Gehäuses 30 drehbar gelagert ist. Die Zähne des Schaltrades 88 sind an der Umfangsfläche der scheibenförmigen Nabe 113 angeordnet. Die Zähne erfassen jedoch — wie die Fig. 18 zeigt — nur einen Teilbereich der Umfangsfläche der Nabe 114. Ein anderer Teil der Umfangsfläche ist mit der Ausnehmung 95 versehen, in die zur Drehbegrenzung des Schaltrades 88 der Anschlagstift 89 eingreift. De Lage der Ausnehmung 95 bestimmt den Drehwinkel des Schaltrades 88.

Das Schaltrad 88 ist über die Verzahnung 87 der Verlängerung 86 des Deckels 34 in die in der Fig. 18 dargestellte Schaltbereitschaftslage gedreht worden. In dieser Lage übergreift eine im Ringansatz 108 des Drehknopfes 91 angeordnete Ausnehmung 131 den rohrförmigen Ansatz des Schaltrades 88. Dabei befinden sich durch die Verzahnung 87 der Verlängerung 86 am Deckel 34 die Schlitze 111 des Schaltrades 88 in einer solchen Lage, dass der Ringansatz 108 bei Drehung des Drehknopfes 91 die Schlitze 111 passieren kann, um bei Betätigen des Drehknopfes 91 den Schalter 92 in eine seiner Schaltstellungen überführen zu können. Damit der Benutzer sehen kann, welche Schaltstellung eingeschaltet ist, sind Markierungen 128 vorgesehen, vergl. dazu die Fig. 18. In dieser Verriegelungsstellung ist der Deckel 34 nicht vom Aufnahmebehälter 32 abnehmbar.

Auf der anderen Seite bleibt festzustellen, dass der Randbereich 108 des Drehknopfes 91 nur dann in den Schlitz 111 des rohrförmigen Ansatzes 90 eingreifen kann, wenn die in Fig. 18 dargestellte Schaltbereitschaftsstellung eingenommen ist.

Wie aus der Fig. 18 der Zeichnung ersichtlich, ist an der Aussenfläche des Gehäuses 30 ein Kabelhalter 93 angeordnet.

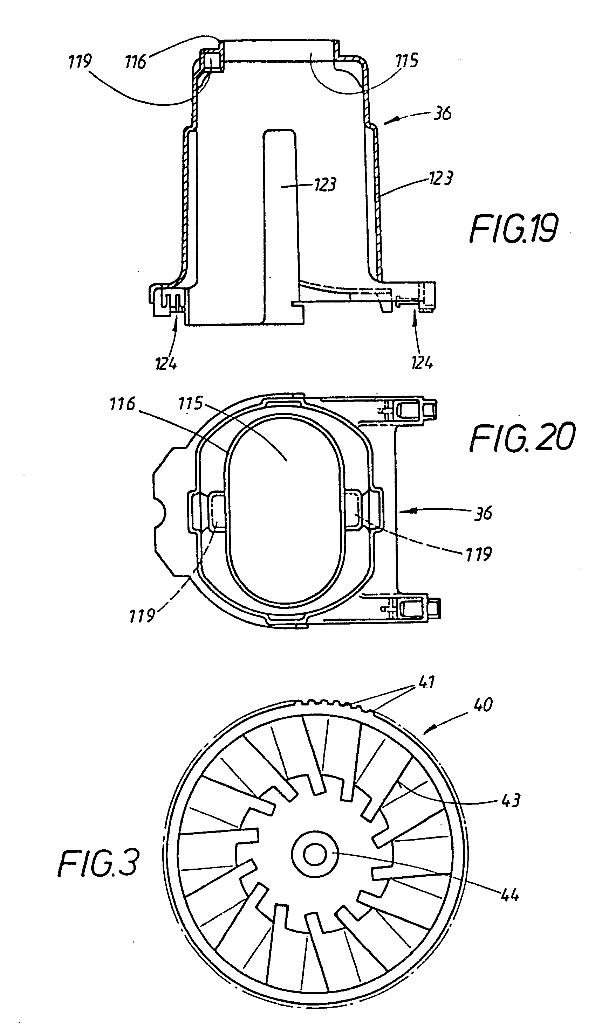

Dem Elektromotor 125 des Gerätes ist eine in den Fig. 19 und 20 dargestellte, generell mit 36 bezeichnete Motorabdeckung zugeordnet. Diese hat einmal die Aufgabe, die Geräuschbildung beim Betrieb des Gerätes herabzusetzen und zum anderen dient sie im Zusammenwirken mit Aussenwandungen des Elektromotors 125 der Führung der Kühlluft, die vom Lüfterrad 40 erzeugt wird.

Die Motorabdeckung 36 ist im gewählten Ausführungsbeispiel als einstückiger, aus Kunststoff gefertigter Körper hergestellt. Die Motorabdeckung 36 ist auf ihrer dem Drehknopf 91 zugekehrten Seite mit einem ovalen Durchbruch 115 versehen, der von einem umlaufenden, hochgezogenen Rand 116 umgeben ist. Dieser Rand 116 dient zur Unterbringung einer leistenförmigen Dichtung 117, die mittels eines nicht näher bezeichneten Schlitzes auf den Rand 116 aufgesteckt ist. Die Dichtung 117 wirkt mit ihr benachbarten Bereichen einer Zwischenwand 118 des Gehäuses 30 zusammen.

Die Motorabdeckung 36 hat ferner in der Nähe des Randes 116 liegend einen kammerartigen Aufnahmeraum 119, in dem ein Pufferstück 120 zur Halterung des Motors angeordnet ist, wie dies die Fig. 17 erkennen lässt. Die gleiche Fig. 17 zeigt auch, dass in der Zwischenwand 118 Öffnungen 121 vorhanden sind, durch die die Kühlluft im Sinne der dort eingezeichneten Pfeile 129 ins Freie strömen kann. Dies geschieht nach mehrfacher Umlenkung durch einen Spalt 122 zwischen dem Gehäuse 30 und der Abdeckung 106. An der Aussenseite liegend hat die Umfangsfläche der Motorabdeckung 36 Versteifungsrippen 123, die sich in Achslängsrichtung der Motorabdeckung 36 erstrecken.

Die Motorabdeckung 36 ist auch in ihrem unteren, dem Gehäusefuss 31 zugekehrten Ende offen. Damit kann die vom Lüfterrad 40 in Bewegung gesetzte Luft auch in den Zwischenraum zwischen den Aussenwandungen des Elektromotors 125 und der Innenwandung der Motorabdeckung 36 gelangen und von dort schliesslich in Richtung der in Fig. 17 eingezeichneten Pfeile 129 durch den Spalt 122 ins Freie gelangen.

In ihrem unteren Bereich ist die Motorabdeckung 36 mit der Trägerplatte 96 lösbar verbunden. Als Verbindungsmittel können Einsteckverbindungen, Schnapp- oder Rastverbindungen benutzt werden, also solche Verbindungen, die sowohl ein leichtes Anbringen als auch bei Bedarf ein einfaches Wiederentfernen der Motorabdeckung 36 von der Trägerplatte 96 zulassen. Diese Verbindungen sind in der Fig. 19 generell mit 124 bezeichnet.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. So ist in den Fig. 1 und 4 der Zeichnung für den Adapter 56 eine doppelte Lagerung vorgesehen, denn der Adapter 56 sitzt nicht nur in seinem unteren Bereich auf der Isolierhülse 52 auf sondern er ist unter Benutzung des Lagerstiftes 78 am Deckel 34 des Aufnahmebehälters 32 zusätzlich gelagert. In Sonderfällen kann auf diese zweite Lagerstelle im Bereich des Deckels 34 verzichtet werden. Bei einer solchen Ausführungsform wird die Verlängerung 76 nur bis in die Nähe der Innenwand des Deckels 34 geführt, ohne dort gelagert zu sein. Bei einer solchen Ausführungsform kann auf die Anordnung einer Bohrung im Bereich des freien Endes der Verlängerung 76 des Adapters verzichtet werden.

Die Ausbildung und auch die Anzahl der dem Adapter 56 zugeordneten Arbeitswerkzeuge kann mannigfach variiert werden, d.h. das Messer, das Knetwerkzeug, die Sahnescheibe können eine andere als die dargestellte Ausführungsform erhalten. Darüber hinaus können auch andere an sich bekannte Werkzeuge mit Kupplungen versehen sein, damit sie in der erfindungsgemässen Art und Weise lösbar mit dem Adapter 56 verbunden werden können. Auch ist es möglich, die Gestalt und Ausbildung sowohl der Kupplungen als auch der Gegenkupplungen von Werkzeug und Adapter zu variieren. Dies gilt insbesondere für die Querschnittsgestaltung dieser Teile.

Auch dem Werkzeugträger 81 können andere als die dargestellte Raspelscheibe 84 zugeordnet werden. Der Einsatz von Raffelscheibe, von Pommes-Frites-Scheiben, Reibscheiben oder Parmesanscheiben ist möglich. Dabei ist grundsätzlich auch daran gedacht, diese Arbeitswerkzeuge direkt mit der Verlängerung 76 des Adapters lösbar zu verbinden, wobei in einem solchen Falle auf die Verwendung eines Werkzeugträgers 81 verzichtet werden könnte.

Ferner wäre es denkbar, in Abänderung der Ausführungsform gemäss den Fig. 17 und 18 der Zeichnung dem Schaltrad bzw. Ritzel 88 eine Feder zuzuordnen. Diese Feder belastet das Schaltrad 88 und verhindert eine ungewollte Fehlbedienung.

In dem Boden des Gehäusefusses 31 können im Bereich des Lüfterrades 40 liegend Ansaugöffnungen für Frischluft vorgesehen sein. Dabei empfiehlt es sich, den Boden nicht unmittelbar auf einer Tischfläche oder dgl. aufruhen zu lassen sondern am Boden Füsse vorzusehen, die die Gewähr dafür geben, dass der Boden einen der Höhe dieser Füsse entsprechenden Abstand von der Tischplatte hat. Dadurch kann ein ungehindertes Ansaugen von Frischluft erfolgen. Ferner ist es zweckmässig, im Inneren des Gehäusefusses Luftleitkanäle vorzusehen, die die vom Lüfterrad erzeugte Frischluft in den Bereich unterhalb des Elektromotors fördern, damit dann von dort aus eine Weiterleitung in Richtung Elektromotor erfolgen kann. Im einfachsten Falle kann man die Luftleitkanäle den Innenwandungen des Gehäusefusses 31 zuordnen, beispielsweise indem man dort Leitrippen oder dgl. anordnet. Darüber hinaus gibt es aber auch die Möglichkeit, für sich hergestellte Luftleitkanäle zu benutzen, die dann in das Innere des Gehäusefusses eingesetzt werden.

Anstelle des in den Figuren der Zeichnungen dargestellten Adapters 56 könnten auch zwei unterschiedlich gestaltete und wahlweise benutzbare Adapter vorgesehen sein. Dabei könnte der eine dann benutzt werden, wenn in dem Aufnahmebehälter 32 nur solche Arbeitswerkzeuge eingesetzt werden, die im Bereich des Bodens desselben arbeiten. In einem solchen Falle braucht der Adapter nur so lange bemessen zu sein, dass er etwa gleich hoch ist wie die Isolierhülse, die ihn lösbar aufnimmt. Die zweite Ausführungsform des Adapters wäre dann mit der Verlängerung 76 ausgestattet. Der Adapter würde dann benutzt, wenn entweder nur Arbeiten im Bereich des Einfüllstutzens des Deckels durchgeführt werden sollen oder wenn alternativ sowohl im unteren als auch im oberen Teil des Aufnahmebehälters die Bearbeitung bzw. Zubereitung von Nahrungsmitteln durchgeführt werden soll.

*Bezugszeichenliste:*

30 Gehäuse
31 Gehäusefuss
32 Aufnahmebehälter (Topf)
33 Handgriff (von 32)
34 Deckel (von 32)
35 Einfüllstutzen (an 34)
36 Motorabdeckung (Zweitgehäuse)
37 Motorwelle
38 Rad (auf 37)
39 Zahnriemen
40 Antriebsrad = Lüfterrad
41 Zähne (von 40)
42 Arbeits-Werkzeugwelle
43 Schaufeln (von 40)
44 Nabe (von 40)
45 Oberteil (von 31)
46 Decke (von 45)
47 Durchbruch (in 46)
48 Absatz (von 46)
49 Vorsprung (von 50)
50 Boden (von 32)
51 hülsenartiger Vorsprung (von 50)
52 Isolierhülse
53 Befestigungsbereich (an 42)
54 scheibenartiger Fuss (von 52)
55 Kupplungsvorsprünge (an 52)
56 Adapter
57 inneres Teilstück (von 56)
58 Gegenkupplungen (an 57)
59 äusseres Teilstück (von 56)
60 Gegenkupplungen (an 59)
61 Kupplungen (am Werkzeug)
62 Knetwerkzeug
63 Nabe (von 62)
64 Flügel (von 62)
65 Messer

66 Messerflügel
67 Nabe (von 65)
68 Niet (für 66)
69 Auflagerand (von 62 bzw. 65)
70 Scheibe (Sahnescheibe)
71 Mitnehmernabe (an 70)
72 Rippen (von 70)
73 Luftleitkanäle (von 70)
74 Lufteinlassöffnungen
75 Wandteil (Begrenzung von 74)
76 Verlängerung (von 56)
77 Lager (an 34)
78 Lagerstift
79 Bohrung (in 76)
80 (obere) Gegenkupplung (an 76)
81 Werkzeugträger (Trägerscheibe)
82 Nabe (von 81)
83 Kupplungen (an 82)
84 Raspelscheibe
85 Verlängerung (an 84)
86 Verlängerung (an 34)
87 Verzahnung
88 Schaltrad
89 Anschlag
90 rohrförmiger Ansatz (an 88)
91 Drehknopf
92 Schalter
93 Kabelhalter
94 Aufnahmeschlitz
95 Ausnehmung
96 Trägerplatte
97 Lager
98 Abstützungen
99 Mutter
100 Scheibe
101 Luftauslassöffnungen
102 Durchbruch (in 84)
130 Kragen
104 Rand (von 81)
105 Vorsprung (an 30)
106 Abdeckung (von 30)
107 Durchbruch
108 Randbereich (von 91)
109 Hohlzapfen (an 91)
110 Lagerstift
111 Schlitz
112 L-förmiger Bereich
113 Schnaupe (von 32)
114 Nabe (von 88)
115 Durchbruch (an 36)
116 Rand (von 115)
117 Dichtung
118 Zwischenwand (von 30)
119 kammerartige Aufnahme
120 Pufferstück (in 119)
121 Öffnung (in 118)
122 Spalt
123 Versteifungsrippe (an 36)
124 Verbindungsmittel (an 36)
125 Elektromotor
126 Spalt (zwischen 49 und 45)
127 Zwischenraum (zwischen 50 und 46)
128 Markierung
129 Pfeil
130 Rastverbindung

**Patentansprüche**

1. Elektrisch betriebenes Gerät für die Bearbeitung und Zubereitung von Nahrungsmitteln aller Art, mit einem Gehäuse (30) zur Unterbringung des Elektromotors (125) und von zugehörigen Schalt- und Steuereinrichtungen, mit einem neben dem Gehäuse (30) angeordneten, auf einem Gehäusefuss (31) aufsetzbaren Aufnahmebehälter (32), mit einer Antriebswelle (42), deren in den Gehäusefuss (31) ragendes freies Ende ein zugleich Kühlluft erzeugendes Rad (40) aufweist, das seinerseits auf seiner Umfangsfläche einen Riemen, vorzugsweise einen Zahnriemen (39) aufnimmt, der über ein zweites Rad (38) geführt ist, welches auf der Motorwelle (37) des Elektromotors (125) fest angebracht ist, wobei zur Führung der Kühlluft und zur Verminderung der Geräusche der Elektromotor (125) von einer Motorabdeckung (36) umgeben ist, die als beidseitig offener Hohlkörper ausgebildet ist und über lösbare Verbindungsmittel (124), wie Rast-, Steck- oder Klemmmittel, mit einer Trägerplatte (96) verbunden ist, dadurch gekennzeichnet, dass dem als Lüfterrad ausgebildeten, auf der Arbeitswelle (42) angeordneten Rad (40) Kühlluftführungen zugeordnet sind, die unterhalb der Motorabdeckung (36) enden und denen ein im wesentlichen ringförmiger Spalt zwischen der Aussenfläche des Elektromotors (125) und den Innenwandungen der Motorabdeckung (36) nachgeschaltet ist, der in einen Durchbruch (115) einmündet, durch welchen die Kühlluft über Öffnungen (121) in einer Zwischenwand (118) des Gehäuses (30) und durch einen Spalt (122) des Gehäuses (30) ins Freie lenkbar ist.

2. Elektrisch betriebenes Gerät nach Anspruch 1, dadurch gekennzeichnet, dass der obere Durchbruch (115) der Motorabdeckung (36) von einem hochgezogenen umlaufenden Rand (116) umgeben ist, der vorzugsweise durch Aufstecken eine Dichtung (117) aufnimmt, die sich bereichsweise an benachbarte Flächen der Zwischenwand (118) anlegt.

3. Elektrisch betriebenes Gerät nach einem oder mehreren der vorangehenden Ansprüche, dadurch gekennzeichnet, dass die Motorabdeckung (36) in ihrem dem Durchbruch (115) benachbarten Bereich kammerartige Aufnahmen (119) zur Unterbringung jeweils eines Pufferstückes (120) zur Halterung des Motors (125) aufweist.

4. Elektrisch betriebenes Gerät nach Anspruch 1, dadurch gekennzeichnet, dass die Motorabdeckung (36) als einstückiger Hohlkörper mit Versteifungsrippen (123) und angeformten Verbindungsmitteln (124) ausgebildet ist.

5. Elektrisch betriebenes Gerät nach Anspruch 1, dadurch gekennzeichnet, dass die Motorabdeckung (36) als Träger für den Elektromotor (125) benutzbar und zusammen mit diesem mit der Trägerplatte (96) verbunden ist.

**Claims**

1. An electrically operated appliance for processing and preparing foodstuffs of all kinds, comprising a housing (30) for disposing the electric motor (125) and associated switching and control devices, a receiving container (32) which is arranged beside the housing (30) and which can be fitted on to a housing base (31), a drive shaft (42) whose free end which projects into the housing base (31) has a wheel (40) which at the same time produces cooling air and which in turn carries on its peripheral surface a belt, preferably a toothed belt (39) which is guided around a second wheel (38) which is fixedly mounted on the drive shaft (37) of the electric motor (125), wherein to guide the cooling air and to reduce the amount of noise the electric motor (125) is surrounded by a motor hood (36) which is in the form of a hollow body which is open at both ends, and which is connected to a carrier plate (96) by way of releasable connecting means (124) such as retaining, push-in or clamping means, characterised in that associated with the wheel (40) which is in the form of a fan wheel and which is arranged on the working shaft (42) are cooling air guides which terminate beneath the motor hood (36) and disposed downstream of which is a substantially annular gap between the outside surface of the electric motor (125) and the inside walls of the motor hood (36), the gap opening into an aperture (115) through which the cooling air can be guided into the open by way of openings (121) in an intermediate wall (118) of the housing (30) and through a gap (122) in the housing (30).

2. An electrically operated appliance according to claim 1, characterised in that the upper aperture (115) in the motor hood (36) is surrounded by an upwardly extended rim (116) which extends therearound and which accommodates, preferably by being fitted thereonto, a seal (117) which bears in a region-wise manner against adjacent surfaces of the intermediate wall (118).

3. An electrically operated appliance according to one or more of the preceding claims, characterised in that the motor hood (36) is provided in its region adjacent the aperture (115) with chamber-like receiving means (119) for accommodating respective buffer portions (120) for mounting the motor (125).

4. An electrically operated appliance according to claim 1, characterised in that the motor hood (36) is in the form of a one-piece hollow body with stiffening ribs (123) and connecting means (124) formed thereon.

5. An electrically operated appliance according to claim 1, characterised in that the motor hood (36) can be used as a carrier for the electric motor (125) and is connected together therewith to the carrier plate (69).

**Revendications**

1. Appareil électrique pour traiter et préparer des aliments de tous genres, comportant un carter (30) renfermant un moteur électrique (125) et des dispositifs de commutation et de commande associés; un récipient (32) disposé à côté du carter (30) et susceptible d'être placé sur un pied (31) du carter; un arbre d'entraînement (42) dont l'extrémité libre faisant saillie dans le pied de refroidissement et qui en même temps, reçoit, à son tour, sur sa surface périphérique une courroie de préférence dentée (39) passant sur une seconde roue (38) fixée sur l'arbre moteur (37) dudit moteur électrique (125), cependant que ce dernier est entouré par une enveloppe de moteur (36) appelée à canaliser l'air de refroidissement et à diminuer le bruit, cette enveloppe étant formée d'un corps creux ouvert sur ses deux côtés et lié à une plaque de support (96) à l'aide de moyens de liaison (124) desserrables tels que des moyens d'arrêt, d'enfichage ou de serrage, caractérisé en ce que la roue (40) disposée sur l'arbre d'entraînement (42) et formant roue de ventilateur est associée à des conduites d'air de refroidissement qui se terminent au-dessous de l'enveloppe (36) du moteur et à l'aval desquelles est ménagée une fente sensiblement annulaure définie entre la surface extérieure du moteur électrique (125) et les parois intérieures de ladite enveloppe (36) du moteur et débouchant dans un évidement (115) à travers lequel l'air de refroidissement est susceptible d'être évacué vers l'extérieur en traversant des ouvertures (121) ménagées dans une cloison intermédiaire (118) du carter (30) et une fente (122) dudit carter (30).

2. Appareil électrique selon la revendication 1, caractérisé en ce que l'évidement supérieur (115) de l'enveloppe de moteur (36) est entouré d'un rebord (116) périphérique s'étendant vers le haut qui reçoit, de préférence par enfichage, un joint d'étanchéité (117) dont certaines zones s'appliquent contre des surfaces adjacentes de la cloison (118).

3. Appareil électrique selon une ou plusieurs des rervendications précédentes, caractérisé en ce que l'enveloppe de moteur (36) présente dans la zone voisine de l'évidement (115) des logements (119) en forme de chambres qui sont destinés à recevoir chacun un élément tampon (120) appelé à supporter le moteur (125).

4. Appareil électrique selon la revendication 1, caractérisé en ce que l'enveloppe (36) du moteur est constituée par un corps creux d'une seule pièce et pourvue de nervures de renforcement (123), ainsi que de moyens de liaison (124) solidaires dudit corps.

5. Appareil électrique selon la revendication 1, caractérisé en ce que l'enveloppe (36) du moteur est susceptible d'être utilisée en tant que support du moteur électrique (125) et est liée, en même temps que ledit moteur, à la plaque de support (96).

FIG.1

FIG.2

FIG.5

FIG.6

FIG.4

FIG.9

FIG.10

FIG.8

FIG.7

0 156 137

FIG.11

FIG.12

FIG.13

FIG.14

FIG.15

FIG.16

FIG.17

FIG.18

FIG.19

FIG.20

FIG.3